# DEMANDE DE BREVET EUROPEEN

(11) **EP 1 113 692 A1**
(43) Date de publication de la demande: **04.07.2001**
(21) Numéro de dépôt: 00403690.1
(22) Date de dépôt: 27.12.2000
(51) Int. Cl.: H04Q 7/38

(54) **Système et procédé de localisation d'un appareil mobile, et appareil mobile pour un tel système**

(30) Priorité: 30.12.1999 FR 9916788
(71) Demandeur: FRANCE TELECOM, 75015 Paris (FR)
(72) Inventeur: Le Therisien, Philippe, 75116 Paris (FR); Junker, Christian, 95170 Deuil la Barre (FR)
(74) Mandataire: Habasque, Etienne Joel Jean-François

(57) **Abrégé**

Ce système de localisation d'un appareil (18) mobile muni au moins d'un émetteur d'ondes radio, au moyen d'un réseau téléphonique de mobiles comprenant un ensemble de cellules (10, 12) dotées chacune d'une station de base (14, 16), l'appareil (18) étant adapté pour communiquer avec chacune des stations de base (14, 16), comporte un centre serveur (28) interrogeable au moyen d'un poste téléphonique (26) et adapté pour interroger ledit appareil (18), directement ou indirectement, pour récupérer, en réponse, des informations de positionnement de l'appareil (18) dans le réseau.

## Description

La présente invention se rapporté à un système de localisation d'un appareil mobile et à un procédé de localisation de cet appareil utilisant un tel système.

Elle s'applique notamment à la localisation d'un poste téléphonique cellulaire mobile dans un réseau de télécommunications.

Dès sa mise en veille, un poste téléphonique mobile échange des informations avec le réseau de mobiles dans lequel il se situe pour que ce dernier puisse le localiser, c'est à dire qu'il puisse identifier la cellule du réseau dans laquelle il se situe, afin d'être en mesure d'effectuer toutes les opérations de commutation nécessaires pour le routage d'un appel vers un poste mobile appelé.

Le but de l'invention est de fournir un système et un procédé de localisation d'un appareil interrogeable par un utilisateur et utilisant les informations de localisation disponibles dans le réseau ou dans l'appareil.

Elle a donc pour objet un système de localisation d'un appareil mobile muni au moins d'un émetteur d'ondes de radio, au moyen d'un réseau téléphonique de mobiles comprenant un ensemble de cellules dotées chacune d'une station de base, l'appareil étant adapté pour communiquer avec chacune des stations de base, caractérisé en ce qu'il comporte un centre serveur interrogeable au moyen d'un poste téléphonique et adapté pour interroger ledit appareil, directement ou indirectement, pour récupérer, en réponse, des informations de positionnement de l'appareil dans le réseau.

Ce système de localisation peut également comporter une ou plusieurs des caractéristiques suivantes, prises isolément selon toutes les combinaisons techniquement possibles:
- le réseau de mobiles comprenant des contrôleurs de stations de base avec lesquels communiquent les stations de base et qui sont raccordés à des commutateurs associés à un enregistreur de localisation nominale et à un enregistreur de localisation de postes mobiles de passage dans une cellule, le centre serveur comprend des moyens pour interroger au moins l'un desdits enregistreurs, par l'intermédiaire de l'un desdits commutateurs, pour récupérer, en réponse, l'indication de la cellule dans laquelle se situe l'appareil,
- l'appareil comportant en outre un récepteur d'ondes radio adapté pour recevoir les ondes radio émises par une station de base, et des moyens d'identification de la cellule dans laquelle il se situe, le centre serveur comporte des moyens pour établir une liaison téléphonique avec l'appareil et pour interroger les moyens d'identification pour récupérer, en réponse, l'indication de la cellule dans laquelle se situe l'appareil,
- l'appareil étant en outre muni d'un récepteur d'un système de positionnement global, le centre serveur comporte des moyens pour récupérer les informations de positionnement délivrées par le système de positionnement global,
- l'appareil comporte un poste téléphonique mobile,
- l'appareil comporte en outre un dispositif d'activation du poste téléphonique mobile, comprenant un récepteur d'ondes radio adapté pour recevoir les ondes radio émises par une station de base et raccordé à une unité centrale de traitement adaptée pour l'activation dudit appareil, en réponse à un appel du dispositif, par le centre serveur,
- le dispositif d'activation est constitué par un dispositif de radio-messagerie unilatérale.

Un autre objet de l'invention est un appareil mobile pour un système de localisation tel que défini ci-dessus, caractérisé en ce qu'il est constitué par un émetteur d'ondes radio adapté pour entrer en communication avec des stations de base d'un réseau de télécommunications et disposé dans un boîtier.

L'invention a également pour objet un procédé de localisation d'un appareil mobile muni au moins d'un émetteur d'ondes radio, au moyen d'un réseau de mobiles comprenant un ensemble de cellules dotées chacune d'une station de base, l'appareil étant adapté pour communiquer avec chacune desdites stations, caractérisé en ce qu'il comporte les étapes d'appel d'un centre serveur au moyen d'un poste téléphonique, interrogation directe ou indirecte de l'appareil, par le centre serveur pour obtenir, en réponse, des informations de positionnement de l'appareil ; et transmission des informations de positionnement récupérées vers le poste téléphonique.

Selon un mode de réalisation particulier, l'appareil étant doté d'un récepteur d'ondes radio et étant adapté pour recevoir des informations relatives à son positionnement, la récupération des informations est réalisée en interrogeant l'appareil.

Selon un autre mode de réalisation, préalablement à l'interrogation de l'appareil, on procède à son activation par pilotage d'un dispositif d'activation de cet appareil.

On peut enfin procéder à l'interrogation directe ou indirecte de l'appareil de façon périodique. Dans ce cas, les informations de localisation sont retransmises en réponse à l'appel du centre serveur.

D'autres caractéristiques et avantages ressortiront de la description suivante, donnée uniquement à titre d'exemple, et faite en référence aux dessins annexés sur lesquels:
- la figure 1 représente schématiquement l'architecture d'un réseau de télécommunications permettant la localisation d'un appareil ;
- la figure 2 est un schéma synoptique montrant schématiquement la structure d'un exemple d'un appareil localisable au moyen d'un système selon l'invention ; et
- la figure 3 est un schéma synoptique du dispositif d'activation de cet appareil.

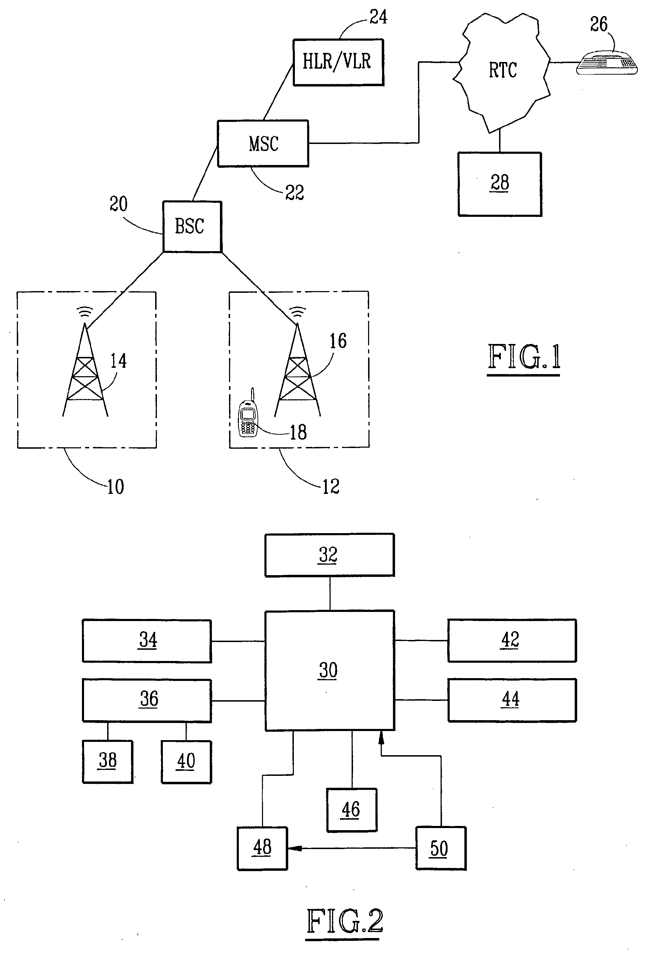

Sur la figure 1, on a représenté un réseau de télécommunications pour postes mobiles cellulaires. Ce réseau est subdivisé en zones géographiques appelées cellules.

Sur cette figure, seules deux cellules 10 et 12 ont été représentées.

Les cellules sont généralement regroupées en zones géographiques, appelées zones locales.

Chaque cellule comporte une station de base 14 et 16, généralement appelée BTS, qui communique par ondes radio avec des appareils mobiles 18 situés dans la cellule ou éventuellement dans les cellules limitrophes.

Les stations de base BTS 14 et 16 sont raccordées à un contrôleur de station de base 20 (BSC), lui-même connecté à un centre de commutation des services mobiles 22 (MSC) capable d'exécuter toutes les commutations nécessaires pour établir une liaison téléphonique entre un appareil mobile situé dans une cellule et un appareil mobile situé dans une autre cellule.

Chaque centre de commutation des services mobiles 22 est associé à un enregistreur de localisation nominal (HLR) et à un enregistreur de localisation de visiteurs de passage dans une cellule (VLR).

Ces enregistreurs sont constitués par une ou plusieurs bases de données 24.

L'enregistreur de localisation nominale HLR réalise la gestion de l'ensemble des appareils mobiles 18 qui lui sont affectés, c'est à dire des appareils mobiles 18 dont la localisation nominale se situe dans les cellules 10 et 12 correspondant à l'enregistreur HLR.

Ainsi, notamment, l'enregistreur HLR contient un code d'identification de chaque mobile qui lui est affecté et des informations portant sur la position en temps réel de cet appareil mobile 18, c'est à dire, par exemple, des informations indiquant la cellule dans laquelle cet appareil se situe.

L'enregistreur VLR, quant à lui, contient une liste des appareils mobiles de passage dans une zone distincte de la zone à laquelle ils sont affectés.

Ainsi, dès qu'un appareil mobile 18 est activé, c'est à dire mis en marche ou mis en veille, une communication s'établit entre cet appareil et le réseau, de manière que la cellule dans laquelle il se situe soit identifiée.

Le centre de commutation des services mobiles MSC 22 est dès lors en mesure de réaliser toutes les commutations nécessaires pour router un appel entre deux appareils mobiles quelle que soit leur position.

Comme on le voit également sur la figure 1, le centre de commutation MSC 22 est également raccordé au réseau téléphonique commuté RTC lequel incorpore, comme cela est classique, un ensemble de postes téléphoniques, tels que 26.

Les informations de localisation contenues dans les éléments du réseau mentionné précédemment ne sont pas accessibles au public.

Pour permettre de fournir ces indications à des tiers autorisés, le système de localisation conforme à l'invention comporte un centre serveur 28 susceptible d'être appelé par un utilisateur au moyen d'un poste téléphonique fixe ou mobile.

Dans l'exemple de réalisation représenté sur la figure 1, ce centre serveur est raccordé au réseau téléphonique commuté.

Bien entendu, il serait également possible de raccorder ce centre serveur au réseau téléphonique mobile.

Le centre serveur est constitué par un serveur de type classique. Il ne sera donc pas décrit en détail par la suite. On notera cependant qu'il incorpore tous les moyens logiciels adaptés pour interroger directement ou indirectement un appareil mobile 18 afin d'obtenir des informations relatives à sa position, par exemple en réponse à une requête formulée par un utilisateur, et en particulier l'indication de la cellule dans laquelle l'appareil se situe, et pour fournir cette indication à l'utilisateur, par exemple par synthèse vocale.

Selon un premier mode de fonctionnement, pour obtenir la position d'un appareil mobile 18, un utilisateur, utilisant un poste téléphonique fixe ou mobile, compose le numéro téléphonique du centre serveur 28 de manière à établir une liaison téléphonique avec celui-ci, suivi d'un numéro indiquant le poste mobile recherché.

En réponse, le serveur 28 établit une communication avec un centre de commutation des services mobiles MSC 22 de manière à venir interroger le registre de localisation nominale HLR pour récupérer, en réponse, l'indication de la cellule dans laquelle l'appareil 18 se situe. Les informations récupérées sont ensuite traitées au niveau du centre serveur 28 afin de convertir les informations indiquant la cellule identifiée en des informations compréhensibles par l'utilisateur, ces informations converties étant ensuite retransmises vers le poste téléphonique de l'utilisateur.

Par exemple, le serveur 28 interroge le MSC le plus proche.

Il est ainsi possible de localiser précisément, avec une précision correspondant à la taille d'une cellule, la localisation de tout type d'appareil mobile comprenant, au moins, un émetteur adapté pour communiquer avec les stations de base du réseau téléphonique, et en particulier un poste téléphonique mobile.

Selon un autre mode de fonctionnement, dans lequel le poste mobile et un poste de type « trace », c'est à dire qu'il comprend des moyens de localisation intégrés incorporant un logiciel spécifique lui permettant de connaître la cellule dans laquelle il se situe, le centre serveur interroge directement ce poste mobile, et non pas par l'intermédiaire du centre de commutation MSC 22 et de l'enregistreur HLR. Il récupère ainsi directement l'indication de la cellule dans laquelle le poste se situe.

Sur la figure 2, on a représenté le schéma synoptique d'un exemple de poste téléphonique mobile capable d'être localisé au moyen d'un système de localisation conforme à l'invention.

Comme cela est classique, le poste 18 comporte principalement un microcontrôleur 30 auquel sont raccordés des dispositifs périphériques 32, 34 et 36, constitués respectivement par un afficheur, un clavier et un vocodeur, lui même associé à un microphone 38 et à un écouteur 40. Le microcontrôleur 30 est également raccordé à un émetteur 42 et à un récepteur 44 d'ondes radio. Une batterie 46 assure l'alimentation du microcontrôleur 30 ainsi que de l'ensemble des éléments du poste téléphonique.

De façon optionnelle, ce poste peut être complété par un récepteur d'un système de positionnement global (GPS), désignés par la référence numérique générale 48, raccordés au microcontrôleur 30.

Ainsi, le poste mobile 18 dispose d'informations de localisation complémentaires, avec une précision de l'ordre de la cinquantaine de mètres. En réponse à un appel du poste mobile 18 par le serveur 28, ces informations complémentaires sont transmises vers le poste téléphonique 26 de l'utilisateur. Ce mode de réalisation présente l'avantage de permettre une localisation relativement précise du poste mobile 18. Elle est avantageuse dans le cas où la cellule dans laquelle le poste se situe couvre une zone géographique relativement étendue.

Comme on le conçoit, le système qui vient d'être décrit ne fonctionne que lorsque l'appareil à localiser est allumé ou est en veille.

L'autonomie d'un poste téléphonique cellulaire étant relativement faible, même en veille, le poste 18 peut être doté d'un dispositif 50 d'activation raccordé au microcontrôleur 30 et, le cas échéant, à l'émetteur et au récepteur GPS 48.

Par exemple, ce dispositif d'activation 50 est constitué par un produit de radio-messagerie unilatérale (RMU).

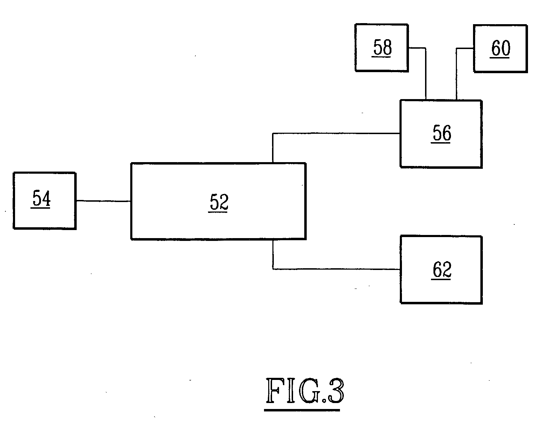

En référence à la figure 3, il comporte principalement un microcontrôleur 52 raccordé à un récepteur 54 capable de recevoir des ondes émises par les stations de base 14 et 16, à un afficheur 56 doté de ses organes de commande 58 et 60 et à une sonnerie 62.

Le microcontrôleur 52 est raccordé au microcontrôleur 30 du poste mobile 18 et, le cas échéant, au récepteur 48 du système de positionnement global GPS.

Ce dispositif d'activation 50 présente une structure simplifiée et donc une consommation moindre. Son autonomie est donc très supérieure à celle du poste mobile auquel il est raccordé.

Dans ce mode de réalisation, pour procéder à la localisation du mobile 18, le centre serveur 28 appelle directement le dispositif d'activation 50.

Celui-ci, en réponse, pilote l'activation du poste mobile 18 de manière à ce qu'il puisse être localisé dans le réseau.

Après localisation, les informations de localisation sont transmises vers le centre serveur 28, comme mentionné précédemment.

Après réception de ces informations, le centre serveur 28 transmet au dispositif d'activation un ordre de commande de coupure de l'alimentation du poste mobile 18. Dès lors, seul le dispositif d'activation 50 reste en veille.

Il est également possible d'obtenir une grande autonomie en dotant le microcontrôleur 30 du poste mobile 18 d'un algorithme capable de provoquer sa mise en veille périodique pour que le réseau soit périodiquement en mesure de connaître la position du poste 18, les informations ou localisation étant retransmises vers le poste de l'utilisateur, en réponse à l'appel du centre serveur par ce dernier.

Enfin, le poste mobile 18 peut comporter, stocké en mémoire, le numéro d'appel du centre serveur 28.

Dans ce cas, une touché spécifique peut être prévue sur le clavier du poste mobile de manière à établir automatiquement une communication avec le centre serveur.

Cette communication est considérée par ce dernier comme un appel de secours. Ainsi, à partir de la localisation du poste mobile 18, il est possible de déclencher des procédures de secours appropriées.

Il est enfin possible de remplacer la batterie d'alimentation 46 du poste mobile 18 par une interface appropriée lui permettant de s'alimenter au moyen d'une source en énergie électrique.

Ainsi, par exemple, ce poste pourrait être raccordé à la batterie d'un véhicule automobile.

Dans les différents exemples de réalisation qui ont été décrit, le système de localisation permet de déterminer la position d'un poste téléphonique cellulaire.

On conçoit cependant que l'invention s'applique également à la localisation de tout appareil portable doté d'un émetteur capable d'établir une communication avec les stations de base du réseau téléphonique.

En particulier, dans ce cas, l'appareil peut être agencé sous la forme d'un boîtier incorporant uniquement un émetteur d'ondes radio entrant en communication avec les stations de base. Il peut ainsi se présenter sous une forme très compacte.

Dans ce dernier mode de réalisation, du fait de son faible encombrement, l'appareil mobile peut se présenter sous la forme d'un accessoire, de type porte-clés, broche, ... L'appelant envoie un signal d'interrogation à l'appareil qui lui retourne, via le serveur, ses coordonnées de localisation, selon le processus ci-dessus indiqué.

Dans tous les cas, il est donc ainsi possible à l'appelant d'obtenir les coordonnées de localisation de l'appareil appelé.

## Revendications

1. Système de localisation d'un appareil (18) mobile muni de moyens (42) pour communiquer avec un réseau téléphonique cellulaire de mobiles, ledit réseau téléphonique cellulaire comportant des moyens (24) pour enregistrer des informations de positionnement pour chaque appareil mobile tel que l'appareil mobile (18), ledit système comprenant un centre serveur (28) interrogeable au moyen d'un poste téléphonique (26) raccordé audits moyens d'enregistrement (24), caractérisé en ce que le centre serveur (28) est adapté pour interroger le moyen d'enregistrement (24) de façon à récupérer, en réponse, des informations de positionnement de l'appareil (18) dans le réseau téléphonique.

2. Système selon la revendication 1, caractérisé en ce que le réseau de mobiles comprenant des contrôleurs de station de base (20) avec lesquels communiquent les stations de base (14, 16) et qui sont raccordés à des commutateurs (22) associés à un enregistreur de localisation nominale (HLR) et à un enregistreur (VLR) de localisation de postes mobiles de passage dans une cellule; le centre serveur (28) comprend des moyens pour interroger au moins l'un desdits enregistreurs (22), par l'intermédiaire de l'un desdits commutateurs, pour récupérer, en réponse, l'indication de la cellule dans laquelle se situe l'appareil (18).

3. Système selon l'une quelconque des revendications précédentes caractérisé en ce que l'appareil comporte un poste téléphonique mobile (18).

4. Système selon la revendication 3, caractérisé en ce que l'appareil comporte en outre un dispositif (50) d'activation du poste téléphonique (18), comprenant un récepteur (54) d'ondes radio, adapté pour recevoir les ondes radio émises par une station de base et raccordé à une unité centrale de traitement (52) adaptée pour l'activation dudit appareil, en réponse à un appel du dispositif, par le centre serveur (28).

5. Système selon la revendication 4, caractérisé en ce que le dispositif d'activation (50) est constitué par un dispositif de radio-messagerie unilatérale.

6. Appareil mobile pour système de localisation selon l'une quelconque des revendications précédentes, caractérisé en ce qu'il est constitué par un émetteur d'ondes radio adapté pour entrer en communication avec des stations de base (20) d'un réseau cellulaire de télécommunication, disposé dans un boîtier.

7. Procédé de localisation d'un appareil mobile (18) muni au moins d'un émetteur (42) d'ondes radio, au moyen d'un réseau téléphonique de mobiles comprenant un ensemble de cellules (10, 12) dotées chacune d'une station de base (14, 16), l'appareil étant adapté pour communiquer avec chacune desdites stations, caractérisé en ce qu'il comporte les étapes suivantes :
- appel d'un centre serveur (28) au moyen d'un poste téléphonique (26);
- interrogation indirecte de l'appareil (18), par le centre-serveur (28), pour obtenir, en réponse, des informations de positionnement de l'appareil ; et
- transmission des informations de positionnement récupérées, vers le poste téléphonique.

8. Procédé selon la revendication 7, caractérisé en ce que préalablement à l'interrogation de l'appareil, on procède à son activation par pilotage d'un dispositif d'activation (50) de cet appareil (18).

9. Procédé selon l'une quelconque des revendications 7 à 8, caractérisé en ce que l'interrogation indirecte de l'appareil (18) est réalisée périodiquement, les informations de localisation étant transmises en réponse à l'appel du centre serveur (28).
